# EUROPÄISCHE PATENTANMELDUNG

(11) **EP 1 108 670 A2**
(43) Veröffentlichungstag der Anmeldung: **20.06.2001**
(21) Anmeldenummer: 00115270.1
(22) Anmeldetag: 14.07.2000
(51) Int. Cl.: B65H 27/00

(54) **Zylindrische Breitstreckwalze für den Wickelvorgang von bahnförmigen Materialien**

(30) Priorität: 19.10.1999 DE 19950175
(71) Anmelder: Mülfarth, Werner, 73230 Kirchheim (DE); Christian Maier GmbH & Co. Maschinenfabrik, D-89520 Heidenheim (DE)
(72) Erfinder: Mülfarth, Werner, 73221 Kirchheim/Teck (DE)
(74) Vertreter: Vetter, Hans, Dipl.-Phys. Dr.

(57) **Zusammenfassung**

Es wird eine zylindrische Rotationswalze, insbesondere eine Anlage- und/oder Breitstreckwalze für den Wickelvorgang von bahnförmigen Materialien, z.B. Folienbahnen (10), vorgeschlagen, deren Walzenkörper (16) umfangsseitig mit einem weichelastischen Belag (18, 21) versehen ist. Dieser weichelastische Belag (18, 21) ist mit einer den Walzenkörper (16) schraubenlinienartig umgreifenden Wendelanordnung (20) versehen, die gegenüber dem Belag (18, 21) härterelastisch ist. Diese Wendelanordnung bewirkt bei der Rotation, daß eventuell vorhandene Lufteinschlüsse zwischen den Lagen der Folienbahn kontinuierlich nach außen gestrichen und dadurch beseitigt werden. Zusätzlich tritt eine Breitstreckwirkung zur Beseitigung von Falten insbesondere dann ein, wenn die Wendelanordnung ausgehend von der Walzenmitte nach den beiden Seiten hin gegensinnig gewendelt ist.

## Beschreibung

Die Erfindung betrifft eine zylindrische Rotationswalze, insbesondere eine Anlage- und/oder Breitstreckwalze für den Wickelvorgang von bahnförmigen Materialien, z.B. Folienbahnen, deren Walzenkörper umfangsseitig mit einem weichelastischen Belag versehen ist.

Bei der Herstellung von Papier- und Folienbahnen werden diese zur Weiterverarbeitung oder zur Auslieferung an Kunden mit hoher Geschwindigkeit auf Wickelwellen aufgewickelt. Zur Erzielung einer guten Bahnführung, insbesondere zur Wickelwelle hin, und zur Erzielung von exakt gewickelten Rollen dienen Anlagewalzen, wie dies beispielsweise aus der DE-A-4104635 bekannt ist.

Insbesondere bei sehr dünnen Folienbahnen und sehr hohen Wickelgeschwindigkeiten besteht die Gefahr, daß die Anlagewalze infolge der Durchbiegung der oftmals mehrere Meter breiten Anordnung, von Form- und Lagetoleranzen, Fliehkräften und Schwingungen nicht vollständig über die gesamte Breite an der Wickelwelle bzw. am Wickel anliegt. Dies verstärkt noch die negativen Effekte, wobei auch Luft miteingewickelt wird, die ebenfalls zu zusätzlichen Unebenheiten führt. Es wurde daher beispielsweise schon in der Zeitschrift "Papier- + Kunststoff-Verarbeiter", Nr. 3 + 4/97 "An neue Erfordernisse angepaßte Wickeltechnik", vorgeschlagen, die Anlagewalze mit einem weichelastischen Belag zu versehen, um solche Unebenheiten auszugleichen. Dies führt zwar zu einer Verbesserung, jedoch bleibt das Problem der Lufteinschlüsse bestehen. Dieses Problem verschärft sich noch bei mit Klebstoff beschichteten Folien, da solche Folienbahnen beim Auflaufen auf die Wicklung sofort mit dieser verkleben, so daß die Lufteinschlüsse mitfixiert werden. Diese eingeschlossene Luft reagiert chemisch mit dem Klebstoff, was zu Materialausschuß führt. Dabei besteht insbesondere das prinzipielle Problem, daß ein zu weicher Belag zwar eine gute Anlage gewährleistet, jedoch in der Kontaktzone mit der Wicklung nicht über ausreichende Stellkräfte verfügt, um die Luft abzupressen. Dies wird nur bei einer ausreichenden Mindesthärte der Walzenoberfläche möglich, wobei dann aber wiederum keine lückenlose Kontaktlinie zwischen Anlagewalze und Wicklung vorliegt. Um eine Wellenbildung oder Falten in der zugeführten Folienbahn zu verhindern, wurden bereits auch sogenannte Breitstreckwalzen vorgeschlagen und werden von der Firma Mount Hope angeboten und vertrieben. Diese Walzen sind im Rotationsbetrieb gekrümmt bzw. weisen eine gekrümmte Drehachse auf. Die Walze ist dabei so eingebaut, daß die Bahn auf der konkaven Seite der Walze aufläuft und sich auf der konvexen Seite von ihr entfernt. Dadurch wird die Bahn quer zur Maschinenrichtung gestreckt. Derartige Breitstreckwalzen sind jedoch konstruktiv sehr aufwendig und teuer, da sie aus einzelnen, separat gelagerten Segmenten bzw. Laufringen bestehen, die mit einem flexiblen Gummischlauch überzogen sind. Auch kann eine solche Breitstreckwalze nicht als Anlagewalze am Wickel eingesetzt werden, da die Achsmitte der Breitstreckwalze nicht parallel zur Wicklung verlaufen kann.

Eine Aufgabe der vorliegenden Erfindung besteht darin, eine zylindrische Rotationswalze zu schaffen, die bei einfachem und kostengünstigem Aufbau beim Wickeln von bahnförmigen Materialien, z.B. Folienbahnen, Vliesen, Verbundmaterialien, dünnen Papierbahnen und dergleichen, auf eine Wickelwelle Lufteinschlüsse verhindert und Wicklungen von hoher Qualität ermöglicht.

Diese Aufgabe wird erfindungsgemäß dadurch gelöst, daß der weichelastische Belag mit einer den Walzenkörper schraubenlinienartig umgreifenden Wendelanordnung versehen ist, die gegenüber dem Belag härterelastisch ist.

Durch diese Wendelanordnung wird beim Einsatz als Anlagewalze eine kontinuierliche Streichwirkung erzielt, durch die die Luft aus der Wicklung herausgeführt werden kann. Dabei ist durch die weichelastische Oberfläche eine gute Anlage an der Wicklung gewährleistet. Dabei kann die elastische Wendelanordnung sicher eventuell vorhandenen Profilunebenheiten der Wicklung folgen. Eine solche Rotationswalze kann einfach und kostengünstig in nahezu beliebiger Breite hergestellt werden.

Durch die in den Unteransprüchen aufgeführten Maßnahmen sind vorteilhafte Weiterbildungen und Verbesserungen der im Anspruch 1 angegebenen Rotationswalze möglich.

Die Wendelanordnung ist zweckmäßigerweise im weichelastischen Material eingebettet, insbesondere integriert.

In besonders vorteilhafter Weise ist die Wendelanordnung ausgehend von der Walzenmitte nach den beiden Seiten hin gegensinnig gewendelt, so daß eventuelle Lufteinschlüsse von der Mitte der Wicklung nach außen durch kontinuierliche Streichwirkung herausgeführt werden. Diese Streichwirkung beinhaltet auch eine Streckwirkung, so daß diese Walze in vorteilhafter Weise auch als Breitstreckwalze dient und sogar als kombinierte Anlage- und Breitstreckwalze eingesetzt werden kann. Hierdurch werden nicht nur Lufteinschlüsse beseitigt bzw. verhindert, sondern gleichzeitig ist ein sicherer Schutz gegen Faltenbildung gegeben. Gegenüber herkömmlichen Anordnungen kann beispielsweise eine Walze eingespart werden.

In einer ersten vorteilhaften Ausführung besteht die Wendelanordnung aus wenigstens einem Druckschlauch oder Druckkanal. Dabei können auch Mittel zur variablen Druckbeaufschlagung der Wendelanordnung vorgesehen sein, so daß im Stillstand und/oder während der Rotation Druckveränderungen und Druckanpassungen möglich sind. Durch diese variable Druckbeaufschlagung kann die Streckwirkung sehr einfach auch bei laufender Maschine variiert werden, so daß durch mehr oder weniger Druck in den Druckschläuchen automatisch die Streckwirkung erhöht oder erniedrigt wird.

Eine weitere vorteilhafte Variante besteht darin, daß die Wendelanordnung aus mehreren, unabhängig voneinander mit Druck beaufschlagbaren Segmenten oder Bereichen besteht. Hierdurch kann auch bei sehr großen Arbeitsbreiten trotz Durchbiegung eine gleichmäßige Anlage ermöglicht werden, indem beispielsweise die mittleren Bereiche entsprechend der größeren Durchbiegung mit größerem Druck beaufschlagt werden. Dieser Druck kann z.B. dann nachgeführt werden, wenn sich bei großen Arbeitsbreiten und wachsenden Rollengewichten die Wickelwelle mehr und mehr durchbiegt. Weiterhin kann durch variablen Druck auch die Breitstreckwirkung variiert werden, da beispielsweise bei allen Breitstreckwirkungen an den Rändern der Materialbahn in der Regel mehr Streckwirkung verlangt wird als in der Mitte. Durch unterschiedliche Druckbeaufschlagung kann eine individuelle entsprechende Streckwirkung vorgesehen werden, was verfahrenstechnisch viele Vorteile bringt. Die Wendelanordnung ist in vorteilhafter Weise wenigstens teilweise über Radialkanäle mit einem Druckspeicher im Inneren der Rotationswalze verbunden, wodurch der gewünschte Druck oder die gewünschten Drücke in der Wendelanordnung besser und sicherer aufrechterhalten werden können. Dabei kann der Druckspeicher zur Erzielung unterschiedlicher Drücke in verschiedenen Bereichen der Wendelanordnung aus mehreren, ganz oder teilweise unabhängig voneinander mit Druck beaufschlagbaren Kammern bestehen, die über die Radialkanäle mit zugeordneten Bereichen der Wendelanordnung verbunden sind.

Zur Erzielung unterschiedlicher Breitstreckwirkungen, insbesondere an den äußeren Randbereichen der Materialbahn bzw. der Rotationswalze, können dort einzelne Bereiche der Wendelanordnung ineinander verzahnt sein und/oder unterschiedliche Wendelabstände besitzen.

Der Druckschlauch oder Druckkanal kann prinzipiell einen runden, ovalen oder vieleckigen Querschnitt besitzen.

In einer alternativen Ausgestaltung der Erfindung kann die Wendelanordnung auch aus einem homogenen Wendelstrang bestehen, der bei einer vorteilhaften Ausgestaltung eine radial nach außen abnehmende Breite besitzt, insbesondere einen im wesentlichen dreieckigen Querschnitt. Hierdurch kann die für die Streich- und Streckwirkung erforderliche Stellkraft von der Wendelanordnung aufgebracht werden, wobei gleichzeitig relativ schmale Anlageflächen vorliegen, die sicher eventuell vorhandenen Profilunebenheiten folgen können.

Eine solche Anordnung ist in einfacher Weise dadurch herstellbar, daß der Wendelstrang am Walzenkörper angeformt ist und wenigstens die Zwischenräume mit dem weichelastischen Belag ausgefüllt sind.

Eine besonders gute Breitstreckwirkung ergibt sich dadurch, daß die Wendelanordnung eine radial nach außen weisende Fläche besitzt, die nicht vom weichelastischen Belag überdeckt ist und einen höheren Reibwert als der des weichelastischen Belags besitzt. Zweckmäßigerweise besitzen dabei die Umfangsfläche des weichelastischen Belags und der Wendelanordnung denselben Radius.

Insbesondere bei einer Ausbildung mit einem Druckschlauch als Wendelanordnung ist diese vorzugsweise in wendelartige, radial nach außen offene Nuten einer am Walzenkörper anliegenden Belagschicht eingesetzt und fixiert, vorzugsweise dadurch, daß eine die Nuten überdeckende äußere Belagschicht vorgesehen ist.

Alternativ hierzu kann die Wendelanordnung auch durch als Druckkanäle ausgestaltete wendelartige, radial nach außen offene Nuten im Walzenkörper gebildet werden, die durch eine die Nuten überdeckende weichelastische äußere Belagschicht abgedeckt und abgedichtet sind. Für die Herstellung solcher Kanäle hat es sich als besonders günstig erwiesen, in den Nuten ein luftdurchlässiges elastisches Material anzuordnen, bevor die weichelastische äußere Belagschicht aufgebracht wird. Hierdurch wird verhindert, daß beim Aufbringen der Belagschicht diese die Nuten ganz oder teilweise ausfüllt.

Ausführungsbeispiele der Erfindung sind in der Zeichnung dargestellt und in der nachfolgenden Beschreibung näher erläutert. Es zeigen:
- Fig. 1: eine als Anlagewalze für eine Wickelwelle ausgebildete Rotationswalze in einer schematischen Ansicht,
- Fig. 2: ein erstes Ausführungsbeispiel einer Rotationswalze, zum Teil geschnitten und zum Teil in der Seitenansicht, mit einer als Druckschlauch mit rundem Querschnitt ausgebildeten Wendelanordnung,
- Fig. 3: eine vergrößerte Teilansicht eines Umfangswandbereichs der in Fig. 2 dargestellten Rotationswalze,
- Fig. 4: eine vergrößerte Teildarstellung eines solchen Wandbereichs in einer abgewandelten Ausführung mit einem Druckschlauch, der einen im wesentlichen rechteckförmigen Querschnitt aufweist,
- Fig. 5: ein weiteres Ausführungsbeispiel einer Rotationswalze in einer Ansicht gemäß Fig. 2 mit einem homogenen Wendelstrang,
- Fig. 6: eine vergrößerte Teildarstellung eines Wandbereichs der in Fig. 5 dargestellten Rotationswalze,
- Fig. 7: eine Schnittdarstellung eines Endbereichs einer Rotationswalze in einer Teildarstellung als weiteres Ausführungsbeispiel der Erfindung, bei dem die Wendelanordnung durch gewendelte Nuten gebildet wird,
- Fig. 8: eine Teildarstellung einer solchen Nut und
- Fig. 9: eine Schnittdarstellung des Endbereichs einer Rotationswalze in einer Teildarstellung als weiteres Ausführungsbeispiel der Erfindung, bei dem die Wendelanordnung im Endbereich engere Wendelabstände besitzt.

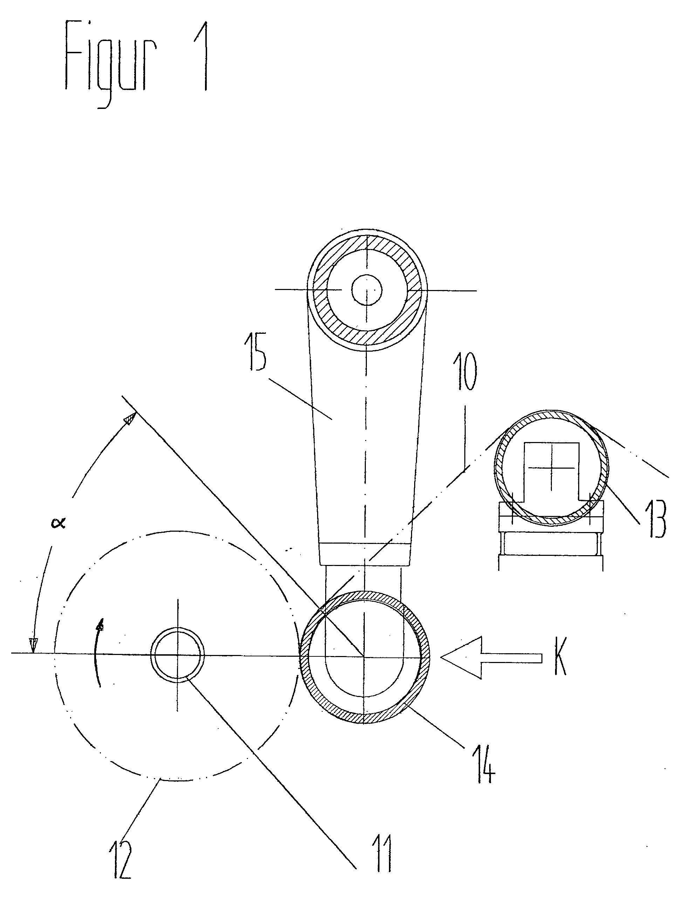

Gemäß der in Fig. 1 schematisch dargestellten Wickelanordnung für eine Folienbahn 10 oder andere bahnförmige Materialien wie Vliese, Verbundmaterialien, dünne Papierbahnen und dergleichen wird diese beispielsweise durch Extrusion hergestellte Folienbahn auf einer schnell rotierenden Wickelwelle 11 aufgewickelt, so daß sich eine Folienrolle 12 bildet. Dabei verläuft die Folienbahn 10 zunächst über eine Umlenkwalze 13 und dann über eine Anlagewalze 14 zur Wickelwelle 11 bzw. Folienrolle 12, wobei die Anlagewalze 14 an zwei im wesentlichen vertikalen Schwenkarmen 15 hängend gelagert ist und an der Folienrolle 12 anliegt. Durch Einstellung des Winkels der Schwenkarme 15 und/oder beispielsweise durch zusätzliche Federmittel kann die Anlagekraft K der Anlagewalze an der Folienrolle 12 eingestellt werden.

Die Folienbahn 10 umschlingt die Anlagewalze 14 entlang eines Bereichs α von gemäß Fig. 1 ungefähr 45°. Der Umschlingungsbereich kann selbstverständlich auch anders eingestellt werden.

Gemäß dem eingangs angegebenen Stand der Technik können die Schwenkarme 15 prinzipiell auch stehend angeordnet sein, oder aber es ist eine andere Art von Lagerung für die Anlagewalze 14 vorgesehen. Weiterhin kann gemäß dem eingangs angegebenen Stand der Technik eine automatische Wechselvorrichtung für Wickelwellen 11 vorgesehen sein.

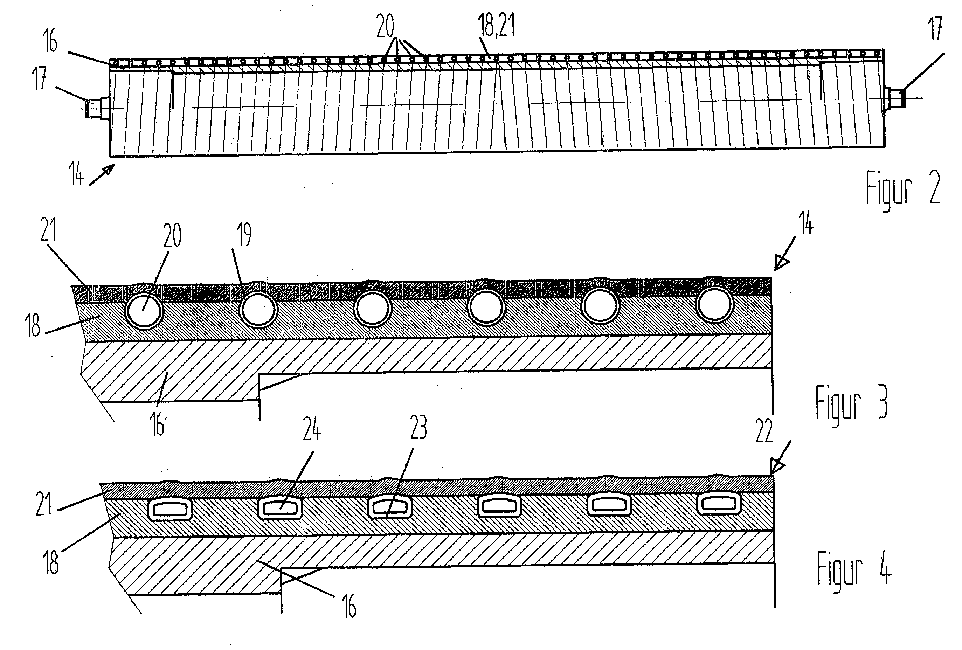

In den Figuren 2 und 3 ist die Anlage 14 als erstes Ausführungsbeispiel dargestellt. Sie besteht aus einem nur zum Teil dargestellten zylindrischen Walzenkörper 16, der beispielsweise als Metallrohr ausgebildet ist und an seinen beiden Stirnseiten mit Lagerzapfen 17 versehen ist.

Die Umfangsfläche des Walzenkörpers 16 ist mit einem weichelastischen ersten Belag 18 versehen, der mit einer wendelartigen, radial nach außen offenen Nut 19 versehen ist. Diese Nut 19 erstreckt sich von der Mitte der Anlagewalze 14 aus schraublinienartig nach den beiden entgegengesetzten Richtungen, wobei die Wendelrichtung jeweils entgegengesetzt ist, wie dies durch strichpunktierte Linien dargestellt ist. In diese Nut mit im wesentlichen halbkreis- bis dreiviertelkreisförmigem Querschnitt ist als Wendelanordnung ein Druckschlauch 20 mit rundem Querschnitt eingelegt und mittels eines darüber angeordneten zweiten weichelastischen Belags 21 fixiert. Die beiden Beläge 18, 21 könne aus demselben weichelastischen gummiartigen Material bestehen.

Durch beliebige Druckbeaufschlagung des Druckschlauchs 20 können leichte Wölbungen an der Walzenoberfläche erzeugt werden, welche sich in die Profilunebenheiten der Folienrolle 12 einschmiegen können. Durch die schraubenlinienartige bzw. wendelartige Anordnung des Druckschlauchs 20 am Walzenumfang erfolgt eine kontinuierliche Streichwirkung von innen in axialer Richtung nach außen, durch die etwa eingeschlossene Luft zwischen den Wicklungen von innen nach außen herausgestrichen bzw. herausgeführt wird. Die Wendelrichtung bzw. die Walzenorientierung muß selbstverständlich hierzu so gewählt werden, daß bei der Rotation der Anlagewalze 14 an der Berührungslinie mit der Folienrolle 12 die Windungen des wendelartigen Druckschlauchs 20 von der Mitte aus axial nach außen wandern.

Darüber hinaus besitzt diese Anlagewalze 14 infolge der Wendelanordnung eine Streckwirkung ähnlich einer Breitstreckwalze. Die Streckwirkung kann in einfacher Weise auch bei laufender Maschine variiert werden, indem mehr oder weniger Druck in den Druckschlauch 20 eingegeben wird, wodurch automatisch die Streckwirkung erhöht oder erniedrigt wird. Diese Streckwirkung wird am Umschlingungsbereich α erzielt, indem die Folienrolle 12 entlang der Anlagewalze 14 und damit dem wendelartigen Druckschlauch geführt wird. Auch dieser Umschlingungsbereich läßt sich nach Bedarf vergrößern oder verkleinern.

In nicht dargestellter Weise können auch mehrere solcher wendelartiger Druckschläuche 20 in den verschiedenen Bereichen oder Segmenten der Anlagewalze 14 unabhängig voneinander angeordnet und mit Druck beaufschlagt werden. Hierdurch kann man z.B. Durchbiegungen der Wickelwelle, insbesondere bei sehr langen Wickelwellen, dadurch kompensieren, indem beispielsweise die inneren Bereiche gegenüber den äußeren Bereichen der Wendelanordnung mit einem höheren Druck beaufschlagt werden. Weiterhin kann durch diese Druckvariation die Streckwirkung variiert werden, da beispielsweise an den Rändern der Materialbahn in der Regel mehr Streckwirkung verlangt wird als in der Mitte. Die Streckwirkung kann daher beliebig variiert und optimiert werden, was auch bei laufender Maschine dadurch geschehen kann, daß beispielsweise die Druckzufuhr über die Lagerzapfen 17 erfolgt.

Das in Fig. 4 dargestellte zweite Ausführungsbeispiel einer Anlagewalze 14 ist prinzipiell gleich aufgebaut, wobei gleiche oder gleichwirkende Bauteile oder Bereiche mit denselben Bezugszeichen versehen und nicht nochmals beschrieben sind. Bei diesem Ausführungsbeispiel besitzt eine abgewandelte Anlagewalze 22 eine Nut 23 im ersten weichelastischen Belag 18 mit rechteckförmigem Querschnitt, wobei in diese Nut 23 ein Druckschlauch 24 mit entsprechend rechteckförmigem Querschnitt eingesetzt ist. Bei einer Druckbeaufschlagung wölbt sich die äußere Wandung des Druckschlauchs 24 radial nach außen und bewirkt somit eine ähnliche Streich- und Streckwirkung wie beim ersten Ausführungsbeispiel. Die beschriebenen Variationen zum ersten Ausführungsbeispiel können auch hier vorgesehen bzw. realisiert sein.

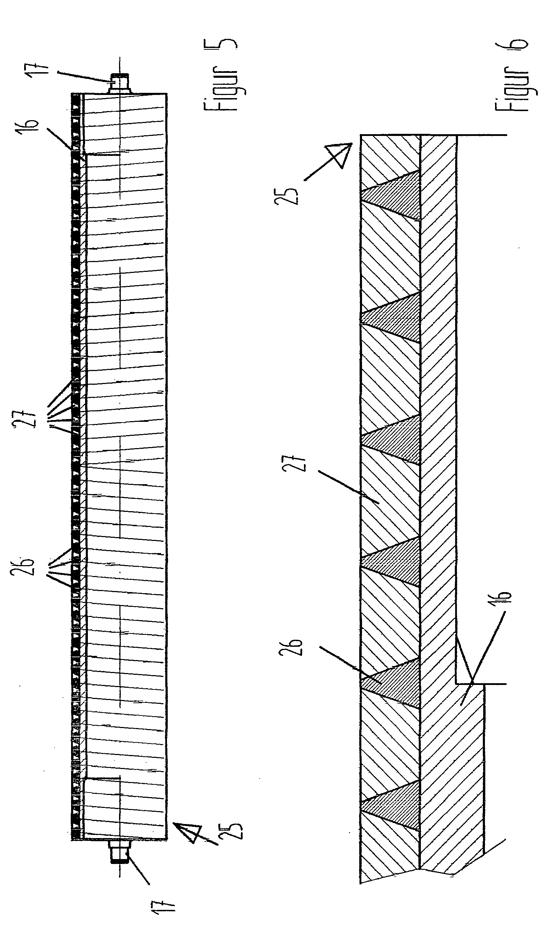

Bei dem in den Fig. 5 und 6 dargestellten dritten Ausführungsbeispiel einer Anlagewalze 25 sind wiederum gleiche oder gleichwirkende Bauteile und Bereiche mit denselben Bezugszeichen versehen und nicht nochmals beschrieben. Im Unterschied zu den ersten beiden Ausführungsbeispielen tritt hier anstelle eines Druckschlauchs 20 bzw. 24 ein homogener Wendelstrang 26 aus einem elastischen Material, das gegenüber dem einen weichelastischen Belag 27 bildenden Material dazwischen etwas härter ist. Ansonsten entspricht die Anordnung des Wendelstrangs 26 der der Druckschläuche 20 bzw. 24.

Der Wendelstrang 26 besitzt einen im wesentlichen dreieckförmigen Querschnitt und erstreckt sich durch den weichelastischen Belag 27 hindurch bis in die Ebene von dessen Umfangsfläche, so daß sich an der Umfangsfläche schmale Streifen des Wendelstrangs 26 mit breiteren Streifen des weichelastischen Belags 27 abwechseln. Der Wendelstrang 26 besitzt einen höheren Reibwert als der Belag 27, wodurch sich eine feine Streckwirkung zur Beseitigung von Falten od. dgl. in der Folienbahn 10 ergibt.

Die Anlagewalze 25 wird beispielsweise dadurch hergestellt, daß der Wendelstrang 26 auf den Walzenkörper 16 aufgebracht und danach die Zwischenräume mit dem weichelastischen Belag 27 aufgefüllt werden, beispielsweise durch Vulkanisieren od. dgl. Anstelle der Dreiecksgestalt kann der Wendelstrang 26 auch andere Querschnitte aufweisen, wobei sich vor allem Querschnitte eignen, deren Breite radial nach außen abnimmt.

Obwohl die Rotationswalze in allen drei Ausführungsbeispielen als Anlagewalze bezeichnet wird, kann sie anstelle als Anlagewalze auch als reine Breitstreckwalze eingesetzt werden, wobei sich eine kombinierte Anwendung besonders anbietet. Die in den Figuren 5 und 6 dargestellte Anlagewalze 25 kann prinzipiell auch gemäß den ersten beiden Auführungsbeispielen hergestellt werden, das heißt, ein erster Belag wird mit einer Nut versehen, und in diese Nut wird der Wendelstrang 26 eingelegt, wonach der zweite weichelastische Belag zu Fixierung darüber angeordnet wird. Dieser zweite weichelastische Belag kann jedoch auch entfallen. Auch die ersten beiden Ausführungsbeispiele können umgekehrt gemäß dem dritten Ausführungsbeispiel hergestellt werden.

In Abwandlung der ersten beiden Ausführungsbeispiele kann der Druckschlauch 20 bzw. 24 selbstverständlich auch drucklos eingesetzt werden, wenn die Wandungen infolge ihrer Steifigkeit ausreichende Stellkräfte erzeugen, um die Streichwirkung bzw. Streckwirkung zu erzielen. Dies bedeutet in anderen Worten, daß als Wendelanordnung auch strangförmige Hohlprofile verwendet werden können.

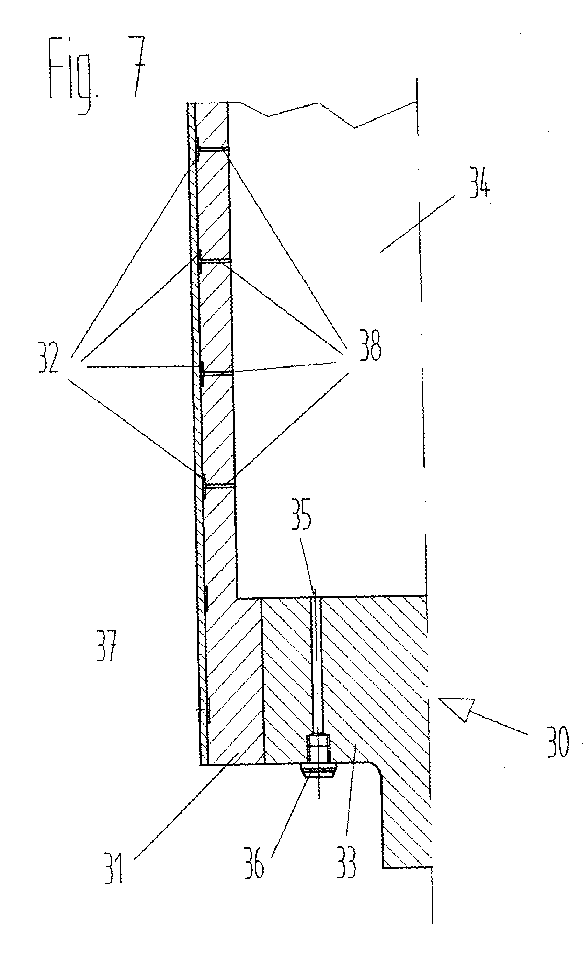

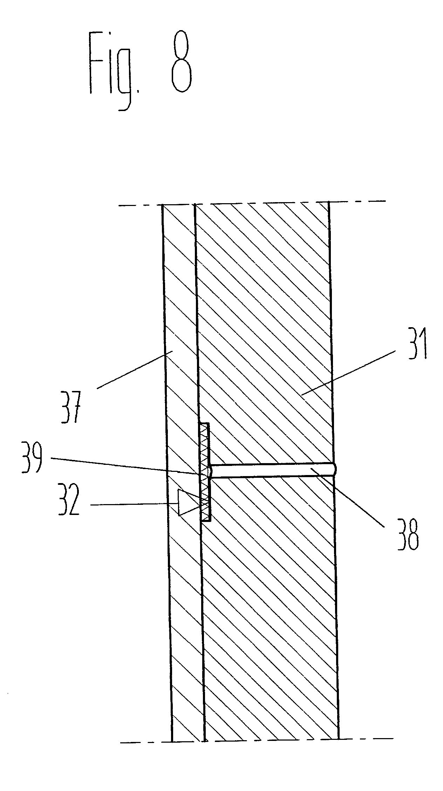

Bei dem in den Fig. 7 und 8 dargestellten vierten Ausführungsbeispiel einer Anlagewalze 30 ist ein Walzenkörper 31 umfangsseitig mit gewendelten Nuten 32 ähnlich den Nuten 23 versehen. Der Walzenkörper 31 wird an seinen beiden Endbereichen von stirnseitigen Rotationsteilen 33 getragen, von denen in der Teildarstellung gemäß Fig. 7 nur eines erkennbar ist, und die in nicht näher dargestellter Weise drehbar an einer Maschine gelagert sind. Der Innenraum der Anlagewalze 30 besitzt einen als Druckspeicher 34 ausgebildeten Hohlraum, der über eine Verbindungsleitung 35 im Rotationsteil 33 mit einem Füllventil 36 verbunden ist.

Zur Bildung der Wendelanordnung ist der Walzenkörper 31 umfangsseitig mit einem weichelastischen Belag 37 versehen, der die Nuten 32 abdeckt, so daß sie Druckkanäle bilden. Diejenigen Windungen der Nuten 32, die axial im Bereich des Druckspeichers 34 angeordnet sind, sind mit diesem über Radialkanäle 38 verbunden, so daß der Druck im Druckspeicher 34 auch in den durch die Nuten 32 gebildeten Druckkanälen bzw. in der durch diese gebildeten Wendelanordnung vorliegt.

Um zu verhindern, daß bei der Aufbringung des weichelastischen Belags 37 die Nuten 32 unerwünschterweise ganz oder teilweise ausgefüllt werden, können diese gemäß Fig. 8 mit einem luftdurchlässigen elastischen Material 39 zuvor ausgefüllt werden. Bei der Druckbeaufschlagung kann das gasförmige Medium durch dieses Material hindurch auf den weichelastischen Belag 37 im Bereich der Nuten 32 ungehindert einwirken und bewirkt dadurch entlang der schraubenlinienartigen Nuten durch Druckbeaufschlagung des weichelastischen Belags 37 eine gegenüber den übrigen Bereichen dieses Belags härterelastische Wendelanordnung.

Der Druckspeicher 34 wird über das Füllventil 36 mit einem gasförmigen Druckmedium beaufschlagt, beispielsweise mit Luft. Die nicht direkt über Radialkanäle 38 mit dem Druckspeicher 34 verbundenen Nutbereiche der Nut 32 werden über die wendel- bzw. schraubenlinienartige Nut selbst mit Druck beaufschlagt.

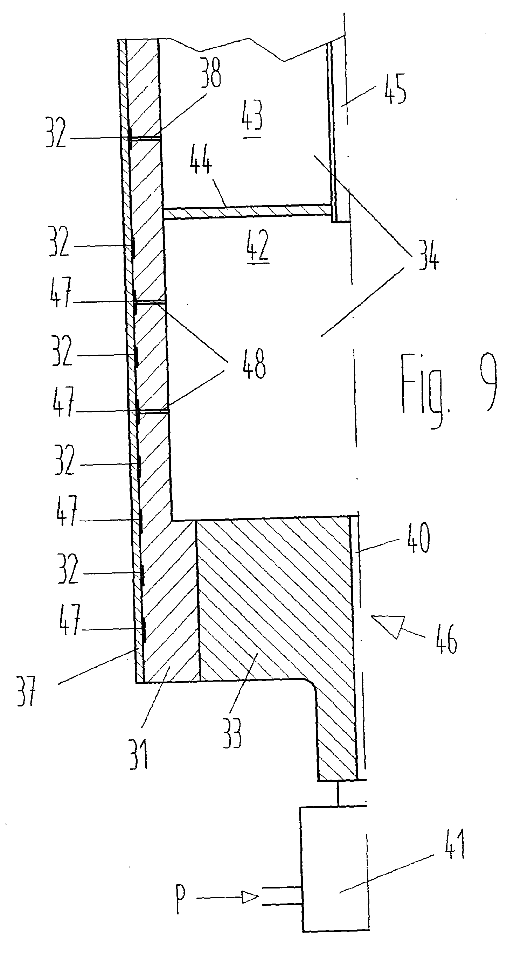

Das in Fig. 9 dargestellte fünfte Ausführungsbeispiel entspricht weitgehend dem vierten Ausführungsbeispiel, so daß gleiche oder gleichwirkende Bauteile und Bereiche mit denselben Bezugszeichen versehen und nicht nochmals beschrieben sind.

Die Verbindungsleitung 35 und das Füllventil 36 entfallen. Die Druckbeaufschlagung des Druckspeichers 34 erfolgt jetzt über eine zentrische axiale Verbindungsleitung 40 im Rotationsteil 33. Diese Verbindungsleitung 40 ist mit einem nicht mitrotierenden Dichtkopf 41 verbunden. Dichtköpfe sind Armaturen zum Anschluß von Druckleitungen an rotierende Vorrichtungen, wie sie beispielsweise im Prospekt "Dichtköpfe" der Firma Christian Maier GmbH & Co, Maschinenfabrik, Heidenheim, beschrieben sind.

Der Druckspeicher 34 ist in drei Kammern 42, 43 mit Hilfe von radialen Trennwänden 44 unterteilt. Hierbei handelt es sich um zwei äußere Kammern 42 und eine mittlere Kammer 43, wobei in der Teildarstellung gemäß Fig. 9 nur eine der äußeren Kammern 42 und ein Teilbereich der mittleren Kammer 43 dargestellt sind. Die beiden äußeren Kammern 42 sind miteinander durch eine axiale Verbindungsleitung 45 verbunden, so daß über den Dichtkopf 41 beide äußeren Kammern 42 mit Druck beaufschlagt werden können. Entsprechend ist am nicht dargestellten gegenüberliegenden Ende der Anlagewalze 46 ein dem Dichtkopf 41 entsprechender Dichtkopf angeordnet, der über eine Verbindungsleitung die mittlere Kammer 43 mit Druck beaufschlagt.

Die Nut 32 ist nur über Radialkanäle 38 mit der mittleren Kammer 43 verbunden, so daß die Windungen dieser Nut 32 im Bereich der äußeren Kammern 42 über diese selbst mit Druck beaufschlagt werden, also nicht über Radialkanäle. In den äußeren Bereichen, also in den Bereichen der äußeren Kammern 42, ist eine zweite, nicht mit der ersten Nut 32 verbundene Nut 47 so angeordnet, daß ihre Windungen jeweils zwischen zwei Windungen der Nut 32 verlaufen. Dies führt zu einer doppelten Windungsdichte in diesen äußeren Bereichen bzw. zu einem halbierten Windungsabstand. Die Nut 47 ist über Radialkanäle 48 jeweils mit den äußeren Kammern 42 verbunden und wird daher über diese mit Druck beaufschlagt. Hierdurch kann eine erwünschte Breitstreckwirkung durch Einstellung der Drücke in den verschiedenen Bereichen eingestellt werden.

Alternativ hierzu ist es selbstverständlich auch möglich, anstelle einer doppelten Windungsdichte auch in den Randbereichen dieselbe Windungsdichte vorzusehen und lediglich durch unterteilte Bereiche der Nut und unterschiedliche Druckkammern unterschiedliche Drücke einzustellen.

Die Druckversorgung über einen Druckspeicher 34 kann selbstverständlich auch bei den ersten drei Ausführungsbeispielen in entsprechender Weise erfolgen, ebenso wie die Unterteilung in unterschiedliche Druckbereiche bzw. Kammern.

Die Druckzuführung über ein Füllventil 36 im nicht rotierenden Zustand oder die Druckzuführung über einen Dichtkopf 41 gemäß Fig. 9 kann selbstverständlich bei den verschiedenen Ausführungsbeispielen nach Bedarf vorgesehen werden. Bei einer Druckzuführung über einen Dichtkopf 41 kann auch bei Bedarf eine Druckveränderung während des Betriebs erfolgen, um beispielsweise eine Anpassung an sich verändernde Rollendurchmesser vorzunehmen.

Als Material für die Rotationsteile 33 eignet sich beispielsweise Stahl, während für den Walzenkörper 16, 31 ein Leichtmetall wie Aluminium oder eine Leichtmetallegierung besser geeignet ist.

## Patentansprüche

1. Zylindrische Rotationswalze, insbesondere Anlage- und/oder Breitstreckwalze für den Wickelvorgang von bahnförmigen Materialien, z.B. Folienbahnen, deren Walzenkörper umfangsseitig mit einem weichelastischen Belag versehen ist, dadurch gekennzeichnet, daß der weichelastische Belag (18, 21; 27; 37) mit einer den Walzenkörper (16; 31) schraubenlinienartig umgreifenden Wendelanordnung (20; 24; 26; 32; 47) versehen ist, die gegenüber dem Belag (18, 21; 27) härterelastisch ist.

2. Rotationswalze nach Anspruch 1, dadurch gekennzeichnet, daß die Wendelanordung (20; 24; 26) im weichelastischen Material (18, 19; 27) eingebettet, insbesondere integriert ist.

3. Rotationswalze nach Anspruch 1 oder 2, dadurch gekennzeichnet, daß die Wendelanordnung (20; 24; 26; 32; 47) ausgehend von der Walzenmitte nach den beiden Seiten hin gegensinnig gewendelt ist.

4. Rotationswalze nach einem der vorhergehenden Ansprüche, dadurch gekennzeichnet, daß die Wendelanordnung (20; 24; 32; 47) aus wenigstens einem Druckschlauch oder Druckkanal besteht und vorzugsweise einen runden, ovalen oder vieleckigen Querschnitt besitzt.

5. Rotationswalze nach Anspruch 4, dadurch gekennzeichnet, daß die Wendelanordnung (20; 24; 32; 47) in wendelartige, radial nach außen offene Nuten (19; 23) im Walzenkörper (16; 31) oder einer daran anliegenden Belagschicht (18) eingesetzt und fixiert ist oder durch diese als Druckkanäle ausgestalte Nuten (32; 47) gebildet wird.

6. Rotationswalze nach Anspruch 5, dadurch gekennzeichnet, daß eine die Nuten (19; 23; 32; 47) überdeckende weichelastische äußere Belagschicht (21; 37) vorgesehen ist.

7. Rotationswalze nach Anspruch 5 oder 6, dadurch gekennzeichnet, daß in den Nuten (32; 47) luftdurchlässiges elastisches Material (39) angeordnet ist.

8. Rotationswalze nach einenm der Ansprüche 4 bis 7, durch gekennzeichnet, daß Mittel zur variablen Druckbeaufschlagung der Wendelanordnung (20; 24; 32; 47) vorgesehen sind, wobei Mittel (36; 41) zur Druckveränderung im Stillstand und/oder während der Rotation vorgesehen sind.

9. Rotationswalze nach einem der Ansprüche 4 bis 8, dadurch gekennzeichnet, daß die Wendelanordnung (20; 24; 32; 47) aus mehreren, unabhängig voneinander mit Druck beaufschlagbaren Segmenten oder Bereichen besteht.

10. Rotationswalze nach einem der vorhergehenden Ansprüche, dadurch gekennzeichnet, daß die Wendelanordnung (32; 47) wenigstens teilweise über Radialkanäle (38; 48) mit einem Druckspeicher (34) im Inneren der Rotationswalze (30; 46) verbunden ist.

11. Rotationswalze nach Anspruch 10, dadurch gekennzeichnet, daß der Druckspeicher (34) aus mehreren, ganz oder teilweise unabhängig voneinander mit Druck beaufschlagbaren Kammern (42; 43) besteht, die über die Radialkanäle (38; 48) mit zugeordneten Bereichen der Wendelanordnung (32; 47) verbunden sind.

12. Rotationswalze nach Anspruch 11, dadurch gekennzeichnet, daß einzelne Bereiche der Wendelanordnung (32; 47) ineinander verzahnt sind und/oder unterschiedliche Wendelabstände besitzen, insbesondere geringere Wendelabstände an den äußeren Randbereichen.

13. Rotationswalze nach einem der Ansprüche 1 bis 3, dadurch gekennzeichnet, daß die Wendelanordnung (26) aus einem homogenen Wendelstrang oder einem Profilstrang besteht und vorzugsweise eine radial nach außen abnehmende Breite besitzt, insbesondere einen im wesentlichen dreieckigen Querschnitt.

14. Rotationswalze nach Anspruch 13, dadurch gekennzeichnet, daß die Wendelanordnung (26) am Walzenkörper (16) angeformt ist und wenigstens die Zwischenräume mit dem weichelastischen Belag (27) ausgefüllt sind.

15. Rotationswalze nach Anspruch 13 oder 14, dadurch gekennzeichnet, daß die Wendelanordnung (26) eine radial nach außen weisende Fläche besitzt, die nicht vom weichelastischen Belag (27) überdeckt ist und einen höheren Reibwert als der des weichelastischen Belags (27) besitzt, wobei die Umfangsfläche des weichelastischen Belags (27) und der Wendelanordnung (26) vorzugsweise denselben Radius besitzen.

16. Rotationswalze nach einem der vorhergehenden Ansprüche, gekennzeichnet durch die Ausbildung als kombinierte Anlage- und Breitstreckwalze.
